(19) Europäisches Patentamt
European Patent Office
Office européen des brevets

(11) EP 3 078 633 A1

(12) EUROPEAN PATENT APPLICATION

(43) Date of publication:
12.10.2016 Bulletin 2016/41

(51) Int Cl.:
*C01B 31/04* (2006.01)

(21) Application number: 15163249.4

(22) Date of filing: 10.04.2015

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
MA

(71) Applicants:
- Rhodia Operations
  75009 Paris (FR)
- CENTRE NATIONAL DE LA RECHERCHE SCIENTIFIQUE
  75794 Paris Cedex 16 (FR)
- UNIVERSITE DE BORDEAUX
  33000 Bordeaux (FR)

(72) Inventors:
- PAVAGEAU, Bertrand
  33140 Villenave d'Ornon (FR)
- POULIN, Philippe
  33400 Talence (FR)
- COLIN, Annie
  33000 Bordeaux (FR)
- ZAKRI, Cécile
  33114 Le Barp (FR)
- NERI, Wilfrid
  33230 Les Peintures (FR)
- LUNA CORNEJO, Ollin Alan
  75012 Paris (FR)
- YUAN, Jinkai
  Qinghe County, Hebei Province (CN)

(74) Representative: Benvenuti, Federica et al
Solvay S.A.
Département de la Propriété Intellectuelle
Rue de Ransbeek, 310
1120 Bruxelles (BE)

# (54) STABILIZED GRAPHENE OXIDE PLATELETS AND POLYMERIC NANOCOMPOSITES COMPRISING THEM

(57) The instant invention relates to a process for preparing stabilized graphene oxide platelets, comprising at least the step of promoting, in a biphasic solvent system, the formation of an electrostatic assembly between graphene oxide platelets and an efficient amount of at least one hydrophobic and ionisable block copolymer.

It also relates to graphene oxide platelets electrostatically stabilized by a diblock copolymer aminodialkylsiloxane-b-dialkylsiloxane and to nanocomposites comprising said stabilized graphene oxide platelets.



Printed by Jouve, 75001 PARIS (FR)

## Description

The present invention relates to the preparation of stabilized graphene oxide platelets and graphene oxide-based nanocomposites comprising the same. In particular, the present invention proposes a new route for preparing graphene oxide monolayers stabilized in organic non-polar solvents under a form homogeneously dispersed.

Graphene, a monolayer of $sp^2$-hybridized carbon atoms arranged in a honeycomb structure, has attracted enormous interest from industry and academia owing to its intrinsic remarkable properties. These atomically thin carbon sheets have high values of Young's modulus (~1 TPa), ultimate strength (130 GPa), thermal conductivity (-5000 W $m^{-1}K^{-1}$), and mobility of charge carriers (200000 $cm^2$ $V^{-1}$ $s^{-1}$).

The unique combination of exceptional electrical, thermal, and mechanical properties of graphene material along with their extremely high surface area (theoretical limit, 2630 $m^2/g$) makes them the ideal reinforcing agent for manufacturing nanostuctured low-cost and high-performance polymer nanocomposites. Early graphene/polymer nanocomposites were achieved in 2006 by Stankovich [1] *via* complete exfoliation of graphite and molecular-level dispersion of individual, chemically modified graphene sheets within polymer host. Since then, numerous research efforts have been devoted to fully harness the properties of graphene in polymer composites for applications ranging from electronics to automotive and aerospace sectors.

However, some long-standing problems still exist and seriously hinder their applicability for practical devices. For instance, it is not so easy to realize the true potential of monolayer graphene in polymer composites since graphene platelets always tend to aggregate irreversibly due to their strong tendency for stacking in response to $\pi$-$\pi$ van der Waals interactions.

One way to achieve a good dispersion of graphene may rely on furnishing it with adequate chemical functionalities to prevent layers against restacking [2]. However, the high-degree covalent functionalization of the lattice surface can significantly damage or even destroy the graphene's intrinsic properties. Some investigations indicated that loading certain nanoparticles (e.g., CdS) on graphene can effectively diminish the interaction between them and facilitate the dispersion, but nanoparticles may give an opposite effect or high massive content when this nanoparticles/graphene hybrid is applied to composite materials.

By contrast, taking graphene oxide, the precursor of graphene, as starting filler for composites, versatile oxygenated functional groups on its edges and basal planes can significantly alter the van der Waals interactions to afford good solubility of graphene oxide in aqueous media and polar solvents, advantageously surfactant free [3].

However, graphene oxide is electrically insulating due to the disruption of conjugated carbon backbone, necessitating an additional reduction step to partially restore the $\pi$-conjugation and render the sheets electrically conductive. Unfortunately, this step inevitably leads to irreversible aggregation of the obtained reduced graphite oxide platelets, which makes their further dispersion in polymers as monolayer again very difficult.

The restacking of reduced graphene oxide can be effectively prevented by blending graphene oxide with polymers prior to the reduction, but this method is mainly restricted to hydrosoluble polymers such as polyethylene oxide (PEO) [4] or polyvinyl alcohol (PVA) [5].

Extension to hydrophobic matrixes requires further functionalization of the graphene oxide surface to allow sheets to be dispersable in non polar organic solvents and miscible with the host polymers. Unfortunately, most of the current methods used to functionalize graphene oxide sheets necessitate anhydrous conditions and harsh reagents, such as the need of high reaction temperatures in excess of 100°C and water- or acid- sensitive reagents [6], or yielding toxic byproducts [7].

Thus, there is a need for a process useful for preparing stabilized graphene oxide platelets in an organic non-polar solvent phase and that do not require forming covalent bindings which damage the graphene oxide properties, and harsh reactive conditions for its preparation.

There is also a need to dispose of a simple process to form uniform nanocomposites including, as electronical material, stabilized graphene oxide platelets.

The present invention has for purpose to meet these needs.

Therefore, according to a first embodiment, the present invention relates to a process for preparing stabilized graphene oxide platelets, comprising at least the step of promoting, in a biphasic solvent system, the formation of an electrostatic assembly between graphene oxide platelets and an efficient amount of at least one hydrophobic and ionisable block copolymer.

According to the present invention:

- the term "platelets" means that the graphene oxide is advantageously in the form of a monolayer. However, the term "platelets" may also encompass a number of layers up to 100, which are superimposed;
- the term "stabilized" means that there is no aggregation phenomenon between the graphene oxide platelets, when they are dispersed in a non polar organic solvent phase. They stay therein under individualized forms, ones from the others. This non aggregation may notably be characterized by naked eyes, as aggregates tend to sediment, or by optical microscopy. Indeed, aggregation can be easily assessed since aggregates have sized that exceed the micron, which is the typical resolution of optical microscopy. When the graphene oxide platelets are qualified as "unstabilized", it means that they are under a form which may aggregate in a non polar solvent phase. In other words, they are not modified according to the invention;

- the term "an electrostatic assembly" means that there is formation of electrostatic binding which involve electrostatic attraction between ions of opposite charges, *i.e.* between the graphene oxide platelets and at least one block copolymer. Such electrostatic assembly or binding are different from covalent bindings or $\pi$-$\pi$ stacking interactions;
- the term "biphasic system" means that the system of the present invention is different from a continuous phase, which is generally monophasic and therefore formed of a single solvent phase.

As detailed here-after, the inventors discovered that the promoting of electrostatic interactions between graphene oxide platelets showing a negatively charge and a specific block copolymer, *i.e.* having an hydrophobic part, and a chemically positively charged part, allows forming stabilized electrostatic assembly between said platelets and said block copolymer.

They also observed that the promoting of this interaction in a biphasic solvent system wherein the graphene oxide platelets to stabilize according to the invention and the block copolymer are present in different solvent phases allows driving the graphene oxide platelets from their initial solvent phase to the non polar solvent phase containing said block copolymer when they are electrostatically bound to said block copolymer.

According to a preferred embodiment, the unstabilized graphene oxide platelets are in solution in a polar solvent phase and preferably in an aqueous phase solvent, in particular water, and the block copolymer is solubilised in a non polar organic solvent phase.

The formation of an electrostatic assembly between both materials, *i.e.* graphene oxide platelets and block copolymer, takes place at the interface of the two phases and may be performed by different ways, well known from the man skilled in the art.

Advantageously, this may be by gentle stirring at room temperature of the biphasic solvent system incorporating them.

Furthermore, the process of the present invention allows not using surfactants to stabilize the graphene oxide platelets in their initial phase. Indeed, surfactants could have the disadvantage of interfering with the stabilization and the transfer to the non-polar phase through its assembly with the block copolymer.

The process according to the invention is advantageous for several reasons.

Firstly, the expected stabilized graphene oxide platelets are obtained by a simple and versatile method which clearly addresses the limitation of the prior technologies for graphene oxide modification, such as the need of high temperatures or irreversible covalent bonding. Thus, the electrostatic attraction may be performed under ambient conditions *via* just promoting the surface contact between the platelets and the block copolymer. As the interaction proceeds, the block copolymer drives graphene oxide platelets from the aqueous to the organic phase and stabilizes their dispersion therein.

Furthermore, the availability of the stabilized graphene oxide platelets under a form having affinity for non-polar solvents allows achieving composites based on hydrophobic matrices incorporating these stabilized platelets.

By properly selecting the block copolymer, the process of the present invention allows for well tailoring graphene oxide dispersibility in organic solvent and interactions towards processing of composites with a variety of hydrophobic polymers.

According to another embodiment, the present invention relates to the use of stabilized graphene oxides platelets obtained by a process described above, as electronic material, in particular as electronic ink.

According to a specific embodiment, the present invention relates to graphene oxide platelets electrostatically stabilized by a diblock copolymer aminodialkylsiloxane-b-dialkylsiloxane, and in particular by a diblock copolymer aminopropylmethylsiloxane-b-dimethylsiloxane.

According to another embodiment, the present invention relates to a biphasic solvent system comprising a first aqueous solvent phase containing negatively charged graphene oxide platelets, and a second non polar solvent phase containing at least one hydrophobic and positively charged block copolymer, said first solvent phase having a pH ranging from the average pKa of said graphene oxide platelets and the pKa of said block copolymer, said block copolymer having a higher pKa than the pKa of graphene oxide platelets.

According to another embodiment, the present invention relates to a biphasic solvent system comprising a first aqueous solvent and a second non polar solvent phase, said second non polar solvent phase containing a dispersion of stabilized graphene oxide platelets, said platelets being under a form electrostatically assembled to at least one hydrophobic and charged block copolymer.

According to another embodiment, the present invention relates to a process for making graphene oxide-based nanocomposites comprising at least the steps consisting in:

(i) having electrostatically stabilized graphene oxide platelets obtained by the process described above;
(ii) bringing together said platelets with one or more polymer or with polymerizable or condensable monomeric units in solution in an organic non-polar solvent phase, and
(iii) promoting the formation of the expected nanocomposites containing said platelets.

This process allows developing high dielectric permittivity, highly deformable and efficient electrostrictive nanocomposites in near percolated regimes.

Furthermore, this process allows developing conductive polymer based nanocomposites when the amount of graphene is above the percolation threshold.

According to another embodiment, the present invention concerns a graphene oxide-based nanocomposites obtained by the process described above.

According to another embodiment, the present invention concerns a reduced graphene oxide-based nanocomposites obtained by the process described above.

According to another embodiment, the present invention relates to the use of graphene oxide-based nanocomposites and/or reduced graphene oxide-based nanocomposites obtained by the process described above, as material in microelectromechanical systems generator, actuators, supercapacitors, high permittivity materials, dielectric sensors, conductive nanocomposites, antistatic composites, electromagnetic shielding films, electronic inks, conductive inks, conductive fibers, composites with barrier properties (water, oxygen), solar cells, material in catalysis, transparent and emissive displays, micromechanical resonators, transistors, as cathode in lithium-air batteries, ultrasensitive chemical sensors, conductive coatings, or as selective membranes.

## I. PROCESS FOR PREPARING STABILIZED GRAPHENE OXIDE PLATELETS

As mentioned above, the present invention concerns a process for preparing stabilized graphene oxide platelets, comprising at least the step of promoting, in a biphasic solvent system, the formation of an electrostatic assembly between graphene oxide platelets and an efficient amount of at least one hydrophobic and ionisable block copolymer.

The biphasic solvent system considered in the present invention contains a first solvent phase containing at least said graphene oxide platelets to stabilize, and a second solvent phase containing at least one block copolymer and an organic non-polar solvent.

### Graphene oxide platelets

Graphene oxides may be represented by the following formula:

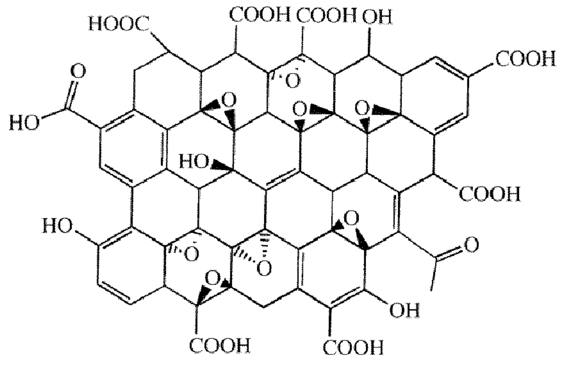

or the like.

As previously mentioned, the graphene oxide platelets are in the form of a monolayer, or of superimposed layers with not greater than 100 layers, and in particular from 1 to 10 layers.

Aqueous solutions of graphene oxide platelets are commercially available. For example, the graphene oxide platelets sold by the Graphenea Company under the reference Graphenea Graphene Oxide may be used. The monolayer content in this product reaches up to 95% and the single layer has a sheet dimension in several micrometers.

Preferentially, the graphene oxide platelets have a thickness ranging from 0.3 to 30 nm, and preferably from 0.5 to 3 nm.

Preferably, the graphene oxide platelets have a surface area ranging from 10 $nm^2$ to 400 $\mu m^2$, and preferably from 100 $nm^2$ to 100 $\mu m^2$.

According to a preferred embodiment, the graphene oxides have an oxygen weight ratio ranging from 25% to 75%, and preferably from 40% to 50%.

Advantageously, the graphene oxide platelets to stabilize are non covalently functionalized on surface.

As detailed here-after, the graphene oxide platelets show a negative charge, under specific conditions, owing to ionization of their carboxylic acid and phenolic hydroxyl groups.

In particular, the unstabilized graphene oxide platelets show a negative charge over a pH ranging from 2 to 11.

Therefore, the initial first solvent phase containing the unstabilized graphene oxide platelets has preferably a pH ranging from the average pKa of the graphene oxide platelets and the pKa of the block copolymer, said block copolymer having a higher pKa than the pKa of graphene oxide platelets.

The average pKa of the unstabilized graphene oxide platelets can be easily determined by the man skilled in the art. For example, to characterize the pKa distribution of graphene oxides, surface titrations can be performed, as illustrated in the documents of Matsumura et al. [8], Kinoshita [9] and Kangasniemu et al. [10].

Advantageously, this pKa value is also adjusted for not altering the positive charge of the block copolymer intended to electrostatically interact with said graphene oxide platelets. This adjustment is clearly in the skills of the man skilled in the art.

### Block copolymer

As mentioned above, the second solvent phase of the biphasic system considered in the present invention contains at least one hydrophobic and ionisable block copolymer.

A "block copolymer" is a copolymer comprising two or more polymeric blocks linked by covalent bonds.

Each polymeric block may be a homopolymeric block or an alternating, periodic or statistical copolymeric

block.

An alternating copolymer is a copolymer with regular alternating "A" and "B" monomeric units.

A periodic copolymer is a copolymer with "A" and "B" monomeric units arranged in a repeating sequence.

A statistical copolymer is a copolymer in with the sequence of "A" and "B" monomeric units follows a statistical rule.

According to a preferred embodiment, the block copolymer is a diblock copolymer.

According to a first embodiment, the diblock copolymer is made of two types of homopolymeric block.

According to another embodiment, the diblock copolymer is made of one homopolymeric block and one statistical copolymeric block.

The diblock copolymer according to the invention contains one hydrophobic polymeric block and one ionisable polymeric block.

The ionisable block is advantageously positively charged to form electrostatic binding with the negatively charged graphene oxide platelets.

The total charge of the block copolymer has to be suitable to form such expected electrostatically assembly.

Preferentially, the ionisable block has a molecular weight ranging from 100 g/mol to 10000 g/mol.

An ionisable block carries ionisable groups, and in particular amino groups.

According to a preferred embodiment, the ionisable block carries primary, secondary or tertiary amine groups.

Such ionisable block may advantageously be chosen from aminopropylmethylsiloxane, aminoethylaminopropylmethylsiloxane, aminoethylaminoisobutylmethylsiloxane, (tetramethylpiperidinyloxy)propylmethylsiloxane.

Preferably, the ionisable block is an aminopropylmethylsiloxane.

The hydrophobic block presents advantageously an affinity with the non polar organic solvent of the solvent phase. This block of the copolymer confers to stabilized graphene oxide platelets an affinity for organic non polar solvent and by this way allows their incorporation in hydrophobic nanocomposites.

A hydrophobic block has advantageously a molecular weight which allows the electrostatically assembly between the block copolymer and the graphene oxide platelets to exhibit affinity with the non polar organic solvent.

Preferentially, the hydrophobic block has a molecular weight ranging from 2000 g/mol to 100000 g/mol.

The hydrophobic block may be chosen from aliphatic polymers, for example polyolefins or polybutadiene, siloxane polymers, for example polydimethylsiloxane, polyesters, rubber partially or totally fluorinated polymers, and aromatic polymers such as polystyrene and polyalkylstyrene.

Preferably, the hydrophobic block is a siloxane polymer.

Advantageously, it is a dimethysiloxane block having a molecular weight greater than or equal to 2000.

Advantageously, the block copolymer carries amino group.

According to a preferred embodiment, the block copolymer has one block carrying amino groups, and one block formed of a siloxane polymer, for example polydimethylsiloxane.

According to another embodiment, the block copolymer has one block carrying amino groups and one block formed of an aliphatic polymer, in particular a polyolefin.

According to another embodiment, the block copolymer has one block carrying amino groups and one block formed of a perfluorinated polymer, or of a partially fluorinated polymer.

As block copolymer particularly convenient for the present invention may be cited the copolymers chosen from aminopropylmethylsiloxane-b-dimethylsiloxane, aminoethylaminopropylmethylsiloxane-b-dimethylsiloxane, aminoethylaminoisobutylmethylsiloxane-b-dimethylsiloxane, aminoethylaminopropylmethoxysiloxane-b-dimethylsiloxane, and (tetramethylpiperidinyloxy)propylmethylsiloxane-b-dimethylsiloxane.

In particular, the block copolymer is a diblock copolymer aminodialkylsiloxane-b-dialkylsiloxane, and preferably, the block copolymer is a diblock copolymer aminopropylmethylsiloxane-b-dimethylsiloxane (PDMS-b-APMS). Such block copolymers are notably sold by the company Gelest under the references AMS-132, AMS-152 and AMS-162. Such block copolymers are of formula:

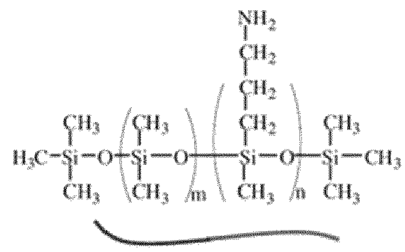

PDMS-*b*-APMS

wherein m and n are integers strictly greater than O. Preferably, the block copolymer is a diblock copolymer aminopropylmethylsiloxane-b-dimethylsiloxane containing from 1 mol% to 10 mol% of amino groups, preferably from 2 mol% to 7 mol% of amino groups and advantageously containing 2-3 mol% of amino groups.

The mol% of amino groups is expressed with respect to the copolymer.

For example, the block copolymer is a diblock copolymer aminopropylmethylsiloxane-b-dimethylsiloxane containing 2-3 mol% amino groups, 4-5 mol%

amino groups or 6-7 mol% groups.

Preferentially, the block copolymer is a diblock copolymer aminopropylmethylsiloxane-b-dimethylsiloxane containing 2-3 mol% of amino groups.

The man skilled in the art may adjust the necessary charge of the block copolymer to stabilize the graphene oxide platelets.

Advantageously, less block copolymer are required once they have more functional amine groups in the considered block.

**Biphasic solvent system**

A previously mentioned, the biphasic system according to the present invention is different from a continuous phase.

It comprises two distinct solvent phases, each of said phases being a continuous phase. In particular, each of said phases may be formed from one or several solvents.

**First aqueous solvent phase**

The first solvent phase contains the graphene oxide platelets and a polar solvent.

This phase allows dispersing the unstabilized graphene oxide platelets before their interactions with the block copolymer, i.e. the unfunctionalized graphene oxide platelets.

In particular, the solvent of the first solvent phase is an aqueous phase, and preferably is water.

As stated above, the first solvent phase has preferably a pH ranging from the average pKa of the graphene oxide platelets and the pKa of the block copolymer, said block copolymer having a higher pKa than the pKa of graphene oxide platelets.

According to a specific embodiment, when the solvent of the first solvent phase is an aqueous phase, the pH of the said first solvent phase is ranging from 3 to 11, and in particular from 5 to 9.

**Second non polar solvent phase**

The second solvent phase contains the hydrophobic and ionisable block copolymer and an organic non-polar solvent.

Advantageously, the organic non-polar solvent is partially miscible and/or not miscible to the first solvent phase.

According to one embodiment, it may have a lower density than the aqueous phase so that the block copolymer-functionalized graphene oxide can be recovered in the upper phase as the phase transfer is achieved.

According to another embodiment, the organic non-polar solvent has a greater density than the aqueous phase. In this case, the block copolymer-functionalized graphene oxide can be recovered in the lower phase as the phase transfer is achieved.

Preferably, the organic non-polar solvent is chosen from ether, as diethyl ether or ether diisopropylique, esters, as ethylacetate, benzene or its derivatives, as alkylbenzene, toluene, xylene or its derivatives, liquid alkanes such as pentane, cyclopentane, hexane and its derivatives, cyclohexane, heptanes and its derivatives, isooctane, decane or dodecane, halogenated solvents as perfluorinated solvents, partially fluorinated solvents, carbon tetrachloride, tetrachloroethane, trichloroethane, chloroform, 1,4-dichloromethane, dicholorethane, chlorobenzene or di-chlorobenzene, butan-1-ol, propan-2-ol, fuels, as diesel, biodiesel, bioester, gas, kerosene or isopar family solvents, white spirit, and their mixtures.

More preferably, the organic non-polar solvent is diethyl ether.

Thus, the biphasic solvent system may be water/diethyl ether.

**Detailed process to form the stabilized graphene oxide platelets**

According to a preferred embodiment, the process of the present invention comprises at least the steps consisting in:

(i) having a biphasic solvent system comprising:

- a first solvent phase containing at least negatively charged graphene oxide platelets, and
- a second solvent phase containing at least one hydrophobic and ionisable block copolymer, in a positively charged form, and one organic non-polar solvent,
  said first solvent phase having a pH ranging from the average pKa of said charged graphene oxide platelets and the pKa of said block copolymer, said block copolymer having a higher pKa than the pKa of graphene oxide platelets;

(ii) promoting the formation of an electrostatic assembly between block copolymer and graphene oxide platelets by stirring said biphasic solvent system and

(iii) getting the expected stabilized graphene oxide platelets in the second solvent phase.

Advantageously, the process is performed at room temperature and under atmospheric pressure.

Favourably, the process of the present invention does not implement the presence of surfactant in the polar or aqueous phase, in which the graphene oxide platelets are first dissolved.

The process of the present invention implements two phenomena, i.e. the electrostatically assembly between the charged block copolymer and the charged graphene oxide platelets, and the migration of said assembly in the non polar organic solvent. Both phenomena may be appearing consecutively or concomitantly.

Initially, the graphene oxide platelets and the hydrophobic and ionisable block copolymer are advantageously present in different solvent phases of the biphasic system, before promoting the formation of their electrostatic assembly.

The graphene oxide platelets and the block copolymer interact under a charged form which may be generated *in situ* or not in the biphasic system, for example by pH adjusting. This pH is of course adjusted to keep both negatively charged platelets and positively charged block copolymer under a reactive form.

According to a preferred embodiment, the block copolymer and the unstabilized graphene oxide platelets are initially present in a "block copolymer/unstabilized graphene oxide platelets" mass ratio ranging from 0.1 to 100.

By varying "block copolymer/unstabilized graphene oxide platelets" mass ratio, the man skilled in the art can determine the minimum amount of block copolymer needed to electrostatically assembly all the graphene oxide platelets.

According to a preferred embodiment, the system comprises initially unstabilized graphene oxide platelets and a block copolymer having in particular at least one block carrying amino groups.

According to this embodiment, the "block copolymer/unstabilized graphene oxide platelets" mass ratio is preferably ranging from 1 to 10.

According to this same embodiment, when the block copolymer is a block copolymer having at least one block carrying amino groups and the solvent of the first solvent phase is an aqueous phase, the pH of the said first solvent phase containing the unstabilized graphene oxide platelets is advantageously ranging from 3 to 11, and in particular from 5 to 9.

The formation of the expected electrostatic assembly between the platelets and the block copolymer is performed by increasing the surface contact between said charged platelets and said charged block copolymer.

The increase of surface contact between the graphene oxide platelets and the block copolymer may be made by magnetic stirring, internal or external stirring, continuous flowing or droplets feeding of graphene oxide dispersion into the non polar solvent phase containing the block copolymer, biphasic microfluidic setups such as co-flow or co-axial flow, flotation process, or any liquid/liquid extraction process well known by the man skilled in the art.

According to a specific embodiment, the increase of surface contact between the graphene oxide platelets and the block copolymer is performed by a semi-continuous process. In particular, into a vessel which contains the phase comprising the block copolymer dissolved in the non-polar solvent, a continuous flow of the polar phase of graphene oxide platelets is dropping under agitation in order to keep the excess of block copolymer versus graphene oxide platelets during the phase transfer.

Advantageously, this embodiment facilitates the rate of phase transfer of the graphene oxide and optimizes the graphene oxide transfer process into the non-polar phase.

Preferably, the increase of surface contact between the graphene oxide platelets and the block copolymer is performed by stirring said biphasic system.

Preferably, the stirring is performed at room temperature and atmospheric pressure.

Preferentially, the stirring is a gentle magnetic stirring.

The expected stabilized graphene oxide platelets are advantageously recovered in the second solvent phase.

In a particular embodiment, the process of the invention comprises an additional step of eliminating the solvents from the mixture obtained at the end of step (iii).

Thus, the solvents can be evaporated at room temperature, in the case of volatile solvents like diethyl ether, to obtain a graphene oxide/block copolymer mixture. Said mixture may be viscous and, if the fraction of graphene oxide is large, it may look like a paste.

This mixture may be further dried at 60°C for 12 hours in a vacuum oven to completely remove the residual solvents.

According to a specific embodiment, said mixture may be isolated and, later, may be dispersed again to be used in the making of nanocomposites.

In other words, when said mixture is isolated, it can be used as "master batch", and then constituted as such a commercial product.

The applied low drying temperature is adjusted to avoid the thermal reduction of graphene oxide at this stage which could lead to the restacking of graphene oxide platelets.

Beneficially, the process of the present invention allows achieving a form of graphene oxide platelets which may be dispersed under a stabilized form up to 40 wt%, and preferentially from 0.1 wt % to 10 wt%, in one non polar solvent phase.

It has also to be noticed that the present invention allows forming liquid crystal phases from the stabilized graphene oxide platelets in a non polar solvent phase.

Indeed, anisotropic platelets are known to form liquid crystal phases when they are solubilized or dispersed in liquid solvents at high concentration.

In particular, graphene oxide platelets are expected to form nematic phases, which are phases in which the graphene oxide platelets exhibit a long range orientational order.

Such phases have been observed in aqueous media but not in non polar solvent.

The present invention allows the dispersion of graphene oxide platelets in non polar solvents. The concentration of dispersed platelets may be tuned by varying

the amount of used platelets and volume of non polar solvents.

In addition, this fraction can potentially further increased after phase transfer by evaporating the solvent. It is therefore possible to achieve sufficiently large concentration of graphene oxide platelets so that they spontaneously form nematic phases.

According to another embodiment, the present invention concerns graphene oxide platelets electrostatically stabilized by a diblock copolymer aminodialkylsiloxane-b-dialkylsiloxane.

According to a preferred embodiment, the diblock copolymer aminodialkylsiloxane-b-dialkylsiloxane is a diblock copolymer aminopropylmethylsiloxane-b-dimethylsiloxane.

The so obtained stabilized graphene oxide platelets may be characterized by scanning electron microscopy image (SEM) or transmission electron microscopy image (TEM).

The stabilized graphene oxides platelets obtained by a process according to the invention can serve as electronic material, in particular as electronic ink.

In particular, such electronic inks are hydrophobic, by contrast to water based inks. They can be used directly to be printed, spread onto a surface and provide electronic functionalities.

According to another embodiment, the present invention relates to a biphasic solvent system comprising a first aqueous solvent phase containing negatively charged graphene oxide platelets, and a second non polar solvent phase containing at least one hydrophobic and positively charged block copolymer, said first solvent phase having a pH ranging from the average pKa of said graphene oxide platelets and the pKa of said block copolymer, said block copolymer having a higher pKa than the pKa of graphene oxide platelets.

According to another embodiment, the present invention relates to a biphasic solvent system comprising a first aqueous solvent and a second non polar solvent phase, said second non polar solvent phase containing a dispersion of stabilized graphene oxide platelets, said platelets being under a form electrostatically assembled to at least one hydrophobic and charged block copolymer.

The block copolymer is as defined previously, and in particular is a diblock copolymer aminodialkylsiloxane-b-dialkylsiloxane, and preferably, the block copolymer is a diblock copolymer aminopropylmethylsiloxane-b-dimethylsiloxane (PDMS-b-APMS).

As previously stated, the graphene oxide platelets according to the present invention are also particularly interesting for achieving nanocomposites.

## II. PREPARATION OF GRAPHENE OXIDE-BASED NANOCOMPOSITES

The stabilized graphene oxides platelets are notably suitable to prepare solid or soft composites.

Therefore, according to another embodiment, the present invention concerns a process for making graphene oxide-based nanocomposites comprising at least the steps consisting in:

(i) having electrostatically stabilized graphene oxide platelets obtained by the process described above;
(ii) bringing together said platelets with one or more polymer or with polymerizable or condensable monomeric units in solution in an organic non-polar solvent phase; and
(iii) promoting the formation of the expected nanocomposites containing said platelets.

The process for making graphene oxide-based nanocomposites is performed in the continuation or not of the process for preparing stabilized graphene oxide platelets.

According to a preferred embodiment, the stabilized graphene oxide platelets considered in the present process have been separated from the solvent mixture used for their preparation, in particular by evaporation and subsequent drying.

Because of the very high viscosity of the obtained graphene oxide/block copolymer mixture after the elimination of the solvents, it may be preferable to consider in step (i) the so isolated stabilized graphene oxide platelets under a form dispersed in an organic non-polar solvent.

The organic non-polar solvent phase comprises a solvent chosen from ether, as diethyl ether or ether diisopropylique, esters, as ethylacetate, benzene or its derivatives, as alkylbenzene, toluene, xylene or its derivatives, liquid alkanes such as pentane, cyclopentane, hexane and its derivatives, cyclohexane, heptanes and its derivatives, isooctane, decane or dodecane, halogenated solvents as perfluorinated solvents, partially fluorinated solvents, carbon tetrachloride, tetrachloroethane, trichloroethane, chloroform, 1,4-dichloromethane, dicholorethane, chlorobenzene or di-chlorobenzene, butan-1-ol, propan-2-ol, fuels, as diesel, biodiesel, bioester, gas, kerosene or isopar family solvents, white spirit, and their mixtures.

Preferably, the solvent is diethyl ether.

The nature of the polymer(s) or of the monomeric units considered in step (ii), which have to exhibit affinity with the stabilized graphene oxide platelets, can be chosen by the man skilled in art.

In particular, the polymer(s) considered in step (ii) are soluble in the organic non polar solvent phase.

The polymer(s) considered in step (ii) are preferably chosen from aliphatic polymers, for example polyolefins or polybutadiene, siloxane polymers, for example polydimethylsiloxane, polyesters, rubber partially or totally fluorinated polymers, and aromatic polymers such as polystyrene and polyalkylstyrene, and and mixtures thereof.

Preferably, the polymer considered in step (ii)

is polydimethylsiloxane.

Advantageously, the polydimethylsiloxane composites may exhibit electrical conductivity, high dielectric permittivity and piezoresistivity and even high electrostriction coefficients depending on the fraction of graphene oxide platelets.

When step (ii) implements polymer(s), the expected nanocomposites containing the platelets are formed in step (iii) by eliminating the solvents.

According to another embodiment, the present invention concerns a process for making graphene oxide-based nanocomposites comprising at least the steps consisting in:

(i) having electrostatically stabilized graphene oxide platelets obtained by the process described above;
(ii) bringing together said platelets with monomeric units in solution in an organic non-polar solvent phase; and
(iii) promoting the polymerisation or polycondensation of said monomeric units to form the expected nanocomposites containing said platelets.

The monomeric units considered in step (ii) are preferably chosen from siloxane, in particular dimethylsiloxane, vinylidene difluoride, aliphatic groups, such as olefin, in particular ethylene or propylene, or butadiene, styrene, alkylstyrene, amine, acids, esters, acrylates, partially or totally fluorinated groups, and mixtures thereof.

Preferably, the monomeric units considered in step (ii) are preferably chosen from siloxane, in particular dimethylsiloxane.

When step (ii) implements monomer units, step (iii) promotes the polymerisation or polycondensation of said monomeric units to form the expected nanocomposites containing said platelets. The conditions of the polymerisation or polycondensation of said monomeric units can be easily determined by the man skilled in the art.

In particular, the monomeric units can polymerize around the platelets. Further, it can also be cured.

Such curing can be performed by different ways, well known by the man skilled in the art. For example, an additional agent, such as an initiator, can be added or a thermal step or profile, or a UV curing may be performed. The man skilled in the art has the necessary knowledge to perform the curing steps, according to the used polymerisation process, for example polycondensation, radical polymerization such as controlled radical polymerisation (MADIX, ATRP...) or live radical polymerization, ionic polymerization or any brindged reticulation processes.

The mixture may be preferably heated in step (iii) at a temperature ranging from 20°C to 200°C, in particular during a period ranging from 30 minutes to 48 hours.

Preferably, step (iii) is performed at a temperature of 60°C, for 4 hours.

According to a preferred embodiment, the electrostatically stabilized graphene oxide platelets and the monomer units are initially present in a "electrostatically stabilized graphene oxide platelets/monomer units" mass ratio ranging from 0.001 to 99.

According to a preferred embodiment, the graphene oxide-based nanocomposites presents a weight load of stabilized graphene oxide platelets ranging from 0.001 to 99, preferably ranging from 0.01 to 90.

Advantageously, the achieved composites exhibit electrical functionalities after reduction of the graphene oxide platelets to graphene platelets, *via* simple and gentle thermal heating for example or *via* any other methods of reduction of graphene oxide, well known from the man skilled in the art.

For example, it may be cited the photo-reduction of graphene oxide by xenon flash method, chemical or electrochemical reduction, or linear sweep voltammetry (electroreduction). The graphene oxide may also be treated with hydrazine hydrate, and the obtained solution maintained at 100°C for 24 hours. The graphene oxide may also be exposed to hydrogen plasma for few seconds or to another form of strong pulse light, such as those produced by xenon flashtubes. According to other embodiments, the graphene oxide may be heated in distilled water at varying degrees for different lengths of time, or it may be combined with an expansion-reduction agent such as urea and heated to cause the urea to release reducing gases and then cooled. The graphene oxide may also be directly heated to very high levels in a furnace.

Basing on his knowledge, the man skilled in the art will may choose the adapted method of reduction of graphene oxide according to the characteristics and the imposed constraints of the formed nanocomposite.

According to a preferred embodiment, the process for making graphene oxide-based nanocomposites may comprise a subsequent step of heating, in particular at a temperature of 200°C, for 3 hours, to promote the reduction of the formed graphene oxide within the polymeric nanocomposites.

In particular, this step is performed at a temperature ranging from 100°C to 250°C, in particular during a period ranging from 1 hour to 24 hours.

Such in-*situ* thermal reduction is performed on graphene oxide in the solid composites to increase its conductivity without changing the nanosheet dispersion state in the final reduced graphene oxide/block copolymer composites.

This step allows a uniform distribution of reduced graphene oxide platelets throughout the nanocomposites. As shown in the following examples, no obvious aggregation is detected.

The achieved composites exhibit electrical conductivity when highly loaded with graphene oxide particles.

The nanocomposites may therefore be characterized by their electrical conductivity, and dielectric permittivity in particular by their AC (alternating current) conductivities. Depending on the fraction of reduced graphene oxide, the conductivities values measured at 100 Hz may vary from $10^{-12}$ S/m to 10 S/m.

The electrostrictive performance of the nanocomposites may be notably characterized by the combination of dielectric spectroscopy and tensile test.

According to another embodiment, the present invention deals with graphene oxide-based nanocomposites obtained by the process described above.

According to another embodiment, the present invention deals with reduced graphene oxide-based nanocomposites obtained by the process described above.

The graphene oxide-based nanocomposites or reduced graphene oxide-based nanocomposites obtained by processes described above can serve as material in microelectromechanical systems (MEMS) generator to harvest vibrational mechanical energy, or as actuators, supercapacitors, high permittivity materials, dielectric sensors, conductive nanocomposites, antistatic composites, electromagnetic shielding films, electronic inks, conductive inks, conductive fibers, composites with barrier properties (water, oxygen), solar cells, material in catalysis, transparent and emissive displays, micromechanical resonators, transistors, as cathode in lithium-air batteries, ultrasensitive chemical sensors, conductive coatings, or as selective membranes.

Now the invention will be described thanks to the following figures and examples which are given to illustrate the invention in a non-limitative way.

## FIGURES

*Figure 1:* AC (alternating current) conductivity of reduced graphene oxide/PDMS composites as a function of mass content of reduced graphene oxide nanosheets, mesured at room temperature and 100 Hz (*example 3*).

*Figure 2*: The mechanism by which a parallel plate capacitor changes capacitance with a mechanical strain during simply stretching (*example 3*).

## EXAMPLES

### Material and method

The monolayer aqueous solution used in the examples is purchased from the Graphenea Company under the name Graphenea Graphene Oxide.

The three used PDMS-b-APMS block copolymers having respectively 2-3 mol%, 4-5 mol%, and 6-7 mol% of amine groups are purchased from Gelest under the name AMS-132, AMS-152 and AMS-162.

The PDMS monomers and the curing agent of example 2 are from the Sylgard 184 commercial kit of the Dow Corning company.

The electrical conductivity is evaluated using a 7260 Materials Mates Impedance Analyzer following the classical method for measurements provided in the user's guide of the instrument.

The electrostrictive performance of the resultant reduced graphene oxide/PDMS near percolation has been studied.

Dielectric properties are directly provided by the 7260 Materials Mates Impedance Analyzer Impendance.

Mechanical properties under tension are characterized by using a Zwick Z2.5 tensile test instrument in classical conditions following the instructions in the user's guide.

### Example 1: Preparation of stabilized graphene oxide platelets

The monolayer content in the Graphenea materials reaches up to 95% and the largest single layers have sheet dimensions that exceed several micrometers.

The graphene oxide platelets solution provided by Graphenea has a concentration of 4 mg/ml. 2.5 ml of this solution is mixed with pure water in order to obtain 10 ml of aqueous solution containing graphene oxide at a concentration of 1 mg/ml, and a pH value of about 5 to enable electrostatic attractions. To functionalize the graphene oxide platelets, three PDMS-B-APMS block copolymers with 2-3 mol%, 4-5 mol%, and 6-7 mol% of amine groups were selected. Each block copolymer is solubilized, in a quantity of 40 mg, in 10 ml of diethyl ether. Each solution is placed at the top of a graphene oxide aqueous solution, as described above. Phase transfer of the graphene oxide platelets is then achieved at the water/diethyl ether interface *via* gentle magnetic stirring, at room temperature and atmospheric pressure for 12 hours.

The stabilized graphene oxide platelets are then recovered in the upper phase as the phase transfer is achieved.

### Example 2: Preparation of graphene oxide-based nanocomposites

The stabilized graphene oxide platelets obtained in example 1 with the PDMS-B-APMS block copolymer with 2-3 mol% of amine groups are used to prepare graphene oxide-based nanocomposites.

To prepare the nanocomposites, 0.8 g of PDMS monomers are added to 10 ml of the diethyl ether phase.

After phase transfer of the graphene oxide platelets, the solvent is evaporated at room temperature to obtain a viscous graphene oxide/PDMS monomer paste. The obtained paste is further dried at 60°C for 12 hours in a vacuum oven to completely remove the residual solvent and water.

1 g of the graphene oxide/PDMS monomer mixture is re-dissolved again in 4 ml of diethyl ether, with

minimum sonication (less than 3 minutes).

The curing agent is subsequently added into this liquid composite with a ratio of 1:10 relative to the PDMS base.

Then, the graphene oxide/PDMS mixture is molded, degassed for 1 hour and cured at 60°C for 4 hours.

Finally, in-*situ* thermal reduction at a temperature of 200°C during 3 hours is performed to increase the conductivity of the composite without changing the nanosheet dispersion state in the final reduced graphene oxide/PDMS composites.

The obtained graphene oxide and reduced graphene oxide/PDMS nanocomposites are very homogenous and highly flexible.

**Example 3: Characterization of the nanocomposites**

The dispersion state of reduced graphene oxide nanocomposites is examined and shown in the scanning electron microscopy (SEM) image of fractured surface of reduced graphene oxide/PDMS composite. A uniform distribution of reduced graphene oxide platelets throughout the nanocomposites is observed and no obvious aggregation of nanosheets can be detected.

In addition, a transmission electron microscopy (TEM) image of reduced graphene oxide sheet in nanocomposites, clearly show the separation of layers after surface modification by the block copolymer.

Moreover, the achieved composites exhibit electrical conductivity when highly loaded with graphene oxide particles. As shown in Figure 1, the AC (alternating current) conductivities measured at 100 Hz of the composites vary as a function of the amount of reduced graphene oxide platelets incorporated. As approaching a critical concentration, the conductivity increases rapidly up to $1.42\times10^{-6}$ S/m, which is several orders of magnitude higher than the conductivity of the virgin polymer matrix. Additionally, because of the uniform dispersion of nanoparticles, the PDMS remains highly stretchable. Therefore, the present invention allows developing highly deformable and efficient electroactive nanocomposites.

Also, the electrostrictive performance of the resultant reduced graphene oxide/PDMS near percolation has been studied. Dielectric spectroscopy and tensile test devices have been combined to measure the permittivity variation during mechanical stretching.

Generally, the change in capacitance of a parallel plate capacitor relies on Poisson contraction as well as permittivity variation. Longitudinal stretching of the capacitor causes elongation in length yet shrinkage in width and thickness due to Poisson's effect. The linear mechanics of this process, as shown in Figure 2, can be described as:

$$\varepsilon_x = \Delta l / l$$

$$\varepsilon_y = \varepsilon_z = \upsilon\varepsilon_x$$

$$l_{\text{stretch}} = l + \Delta l = l + \varepsilon_x l$$

$$w_{\text{stretch}} = w - \Delta w = w - \upsilon\varepsilon_x w$$

$$h_{\text{stretch}} = h - \Delta h = h - \upsilon\varepsilon_x h$$

Where υ is Poisson's ratio, ε is strain, and 1, w, and h are the dimensions of the capacitor at relaxed state. These equations well describe how Poisson's ratio couples strain applied in one axis to opposite strains induced in the other two axes. If the dimensions of capacitor at stretched state are applied to the model of parallel plate capacitance, one can reach:

$$\begin{aligned} C_{\text{stretch}} &= e_0 e_{\text{stretch}} \left(\frac{w_{\text{stretch}} l_{\text{stretch}}}{h_{\text{stretch}}}\right) \\ &= e_0 e_{\text{stretch}} \left(\frac{w(1-\upsilon\varepsilon_x)L(1+\varepsilon_x)}{h(1-\upsilon\varepsilon_x)}\right) \\ &= e_0 e_{\text{stretch}} \frac{wL}{h}(1+\varepsilon_z) \end{aligned}$$

Here, $e_0$ is the permittivity of free space, and $e_{\text{stretch}}$ is the relative dielectric permittivity in the stretched state. This electromechanical equation directly relates the capacitance to the permittivity, applied strain and initial geometry of the capacitor. Despite that this equation is derived from Poisson contraction, it does not depend on the value of Poisson's ratio in the case of isotropic dielectric materials. Therefore, by measuring the capacitance at different strains, the permittivity variations of the material in response to mechanical deformations can be directly determined. This allows for calculation of electrostrictive coefficients of a material with young's modulus Y via generator mode [11] through the following equation:

$$M = \Delta e_{eff} / 2Y\varepsilon_x$$

The dielectric permittivity of the resultant reduced graphene oxide/PDMS composites is first studies at relaxed state. The permittivity of composites increases marginally at low reduced graphene oxide contents (<3 wt%) yet augments rapidly up to 2000 as approaching a critical concentration of ~5 wt% with presenting a remarkable divergent behavior of permittivity. The high permittivity is gained based on the establishment of near-percolated network of reduced graphene oxide sheets. Such near-percolated networks are expected to present a high sensitivity to stress.

To evaluate the electrostriction, the dielectric permittivity is measured at different strains applied on the composites based on the aforementioned mechanism. It appears that the permittivity of pure PDMS slightly decreases with strain, demonstrating a very low electrostrictive coefficient $-1.5\times10^{-18}$ $m^2/V^2$. However, the near-percolated reduced graphene oxide/PDMS composite exhibits a larger permittivity variation within a shorter stain range, consequently giving rise to a giant electrostrictive coefficient ($-4.3\times10^{-14}$ $m^2/V^2$).

Further, the electrostrictive performances are investigate under a cyclic mechanical tensile loading. The near-percolated reduced graphene oxide/PDMS composite with 4.71 wt% of nanosheets is chosen to apply stretching-relaxing cycles. The material was initially stretched up to a strain of 4% to measure the permittivity. After that the deformation was released with a same rate as stretching. Such cycle was repeated 20 times to evaluate the stability of electrostriction. It was found the permittivity variation slightly decreased from 900 to 750 during the first 4 cycles yet hereafter tended to remain stable and give rise to a constant electrostriction coefficient of-$4.0\times10^{-14}$ $m^2/V^2$.

This giant electrostrictive coefficient coupled with the good reproducibility during cycles demonstrates that the process of the present invention of dispersing graphene oxide platelets is very advantageous for the preparation of robust and highly efficient electrostrictive materials for harvesting vibrational mechanical energy.

**REFERENCES**

[1] Stankovich S, Dikin DA, Dommett GHB, Kohlhaas KM, Zimney EJ, Stach EA, et al. Graphene-based composite materials. Nature. 2006;442(7100):282-6.

[2] Liu Z, Zhu S, Li Y, Li Y, Shi P, Huang Z, et al. Preparation of graphene/poly(2-hydroxyethyl acrylate) nanohybrid materials via an ambient temperature "grafting-from" strategy. Polymer Chemistry. 2015;6(2):311-21.

[3] Du J, Cheng H-M. The Fabrication, Properties, and Uses of Graphene/Polymer Composites. Macromolecular Chemistry and Physics. 2012;213(10-11):1060-77.

[4] Lee HB, Raghu AV, Yoon KS, Jeong HM. Preparation and Characterization of Poly(ethylene oxide)/Graphene Nanocomposites from an Aqueous Medium. Journal of Macromolecular Science Part B-Physics. 2010;49(4):802-9.

[5] Salavagione HJ, Gomez MA, Martinez G. Polymeric Modification of Graphene through Esterification of Graphite Oxide and Poly(vinyl alcohol). Macromolecules. 2009;42(17):6331-4.

[6] Huang Y, Yan W, Xu Y, Huang L, Chen Y. Functionalization of Graphene Oxide by Two-Step Alkylation. Macromolecular Chemistry and Physics. 2012;213(10-11):1101-6.

[7] Dreyer DR, Park S, Bielawski CW, Ruoff RS. The chemistry of graphene oxide. Chemical Society Reviews. 2010;39(1):228-40.

[8] Yoshimi Matsumura, Shigeji Hagiwara, Hiroshi Takahashi. Automatic potentiometric titration of surface acidity of carbon black. Carbon. 1976;14(3):163-67.

[9] K. Kinoshita. Carbon: Electrochemical and Physicochemical Properties. Carbon materials. New York, NY: Wiley. 1988; p. 293-379; 1-379.

[10] K. H. Kangasniemi, D. A. Condit, and T. D. Jarvi. Characterization of Vulcan Electrochemically Oxidized under Simulated PEM Fuel Cell Conditions. Journal of Electrochemical Society. 2004;151(4):E125-32.

Lallart M, Cottinet P-J, Guyomar D, Lebrun L. Electrostrictive polymers for mechanical energy harvesting. Journal of Polymer Science Part B-Polymer Physics. 2012;50(8):523-35.

## Claims

1. A process for preparing stabilized graphene oxide platelets, comprising at least the step of promoting, in a biphasic solvent system, the formation of an electrostatic assembly between graphene oxide platelets and an efficient amount of at least one hydrophobic and ionisable block copolymer.

2. The process according to the previous claim, wherein said graphene oxide platelets and said block copolymer are present in different solvent phases of said biphasic system, before promoting the formation of an electrostatic assembly.

3. The process according to any one of the previous claims comprising at least the steps consisting in:

   (i) having a biphasic solvent system comprising:

      - a first solvent phase containing at least negatively charged graphene oxide platelets, and
      - a second solvent phase containing at least one hydrophobic and ionisable block copolymer, in a positively charged form, and one organic non-polar solvent,

   said first solvent phase having a pH ranging from the average pKa of said charged graphene oxide platelets and the pKa of said block copolymer, said block copolymer having a higher pKa than

the pKa of graphene oxide platelets;
(ii) promoting the formation of an electrostatic assembly between block copolymer and graphene oxide platelets by stirring said biphasic solvent system and;
(iii) getting the expected stabilized graphene oxide platelets in the second solvent phase.

**4.** The process according to any one of the previous claims, wherein the "block copolymer/graphene oxide platelets" mass ratio is ranging from 0.1 to 100.

**5.** The process according to claim 3 or 4, wherein the solvent of the first solvent phase is an aqueous phase, and the pH of said first solvent phase is ranging from 3 to 11, and in particular from 5 to 9.

**6.** The process according to any one of the previous claims, wherein the block copolymer is a diblock copolymer aminodialkylsiloxane-b-dialkylsiloxane, preferably a diblock copolymer aminopropylmethylsiloxane-b-dimethylsiloxane, and preferably a diblock copolymer aminopropylmethylsiloxane-b-dimethylsiloxane containing from 1 mol% to 10 mol% of amino groups, preferably from 2 mol% to 7 mol% of amino groups and advantageously containing 2-3 mol% of amino groups.

**7.** Use of stabilized graphene oxide platelets obtained by the process according to any one of claims 1 to 6, as electronic material, in particular as electronic ink.

**8.** Graphene oxide platelets electrostatically stabilized by a diblock copolymer aminodialkylsiloxane-b-dialkylsiloxane, and in particular by a diblock copolymer aminopropylmethylsiloxane-b-dimethylsiloxane.

**9.** A biphasic solvent system comprising a first aqueous solvent phase containing negatively charged graphene oxide platelets, and a second non polar solvent phase containing at least one hydrophobic and positively charged block copolymer, said first solvent phase having a pH ranging from the average pKa of said graphene oxide platelets and the pKa of said block copolymer, said block copolymer having a higher pKa than the pKa of graphene oxide platelets.

**10.** A biphasic solvent system comprising a first aqueous solvent and a second non polar solvent phase, said second non polar solvent phase containing a dispersion of stabilized graphene oxide platelets, said platelets being under a form electrostatically assembled to at least one hydrophobic and charged block copolymer.

**11.** A process for making graphene oxide-based nanocomposites comprising at least the steps consisting in:

(i) having electrostatically stabilized graphene oxide platelets obtained by the process according to any one of claims 1 to 6;
(ii) bringing together said platelets with one or more polymer or with polymerizable or condensable monomeric units in solution in an organic non-polar solvent phase; and
(iii) promoting the formation of the expected nanocomposites containing said platelets.

**12.** The process according to the previous claim, further comprising a subsequent step of heating, in particular at a temperature of 200°C, for 3 hours, to promote the reduction of the formed graphene oxide within the polymeric nanocomposites.

**13.** A graphene oxide-based nanocomposite obtained by the process according to claim 11.

**14.** A reduced graphene oxide-based nanocomposite obtained by the process according to claim 12.

**15.** Use of graphene oxide-based nanocomposites and/or reduced graphene oxide-based nanocomposites obtained by the process according to any one of claims 11 and 12, as material in microelectromechanical systems generator, or as actuators, supercapacitors, high permittivity materials, dielectric sensors, conductive nanocomposites, antistatic composites, electromagnetic shielding films, electronic inks, conductive inks, conductive fibers, composites with barrier properties (water, oxygen), solar cells, material in catalysis, transparent and emissive displays, micromechanical resonators, transistors, as cathode in lithium-air batteries, ultrasensitive chemical sensors, conductive coatings, or as selective membranes.

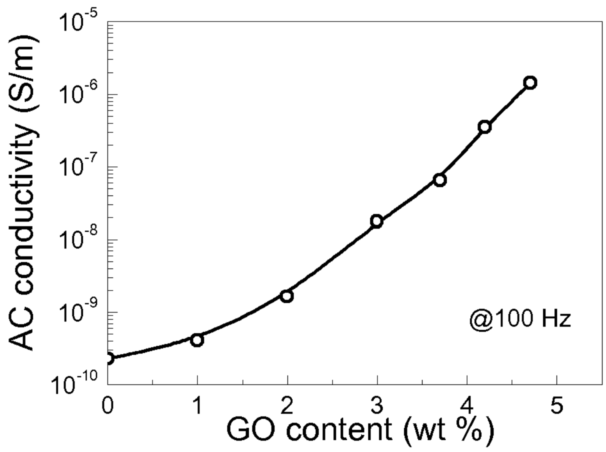


Figure 1

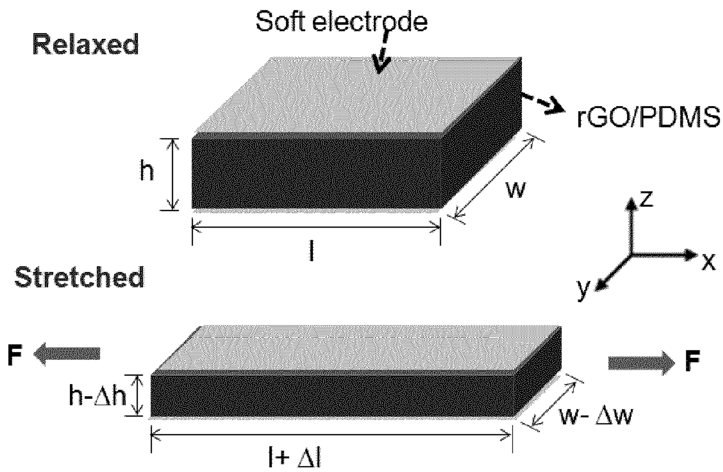


Figure 2

Europäisches Patentamt
European Patent Office
Office européen des brevets

# EUROPEAN SEARCH REPORT

Application Number
EP 15 16 3249

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>Y | DANIELA VULUGA ET AL: "Straightforward synthesis of conductive graphene/polymer nanocomposites from graphite oxide", CHEMICAL COMMUNICATIONS > CHEMICAL COMMUNICATIONS - CHEMCOM, vol. 47, no. 9, 1 January 2011 (2011-01-01), page 2544, XP055218842, GB ISSN: 1359-7345, DOI: 10.1039/c0cc04623j<br>* the whole document *<br>----- | 1-5,7, 9-15<br><br>6,8 | INV. C01B31/04 |
| X | BORA C ET AL: "Fabrication of polypyrrole/graphene oxide nanocomposites by liquid/liquid interfacial polymerization and evaluation of their optical, electrical and electrochemical properties", POLYMER, ELSEVIER SCIENCE PUBLISHERS B.V, GB, vol. 53, no. 4, 25 December 2011 (2011-12-25), pages 923-932, XP028398257, ISSN: 0032-3861, DOI: 10.1016/J.POLYMER.2011.12.054 [retrieved on 2012-01-10]<br>* the whole document *<br>----- | 1,2,4,5, 7,11,13, 15 | TECHNICAL FIELDS SEARCHED (IPC)<br>C01B |
| A | STANKOVICH S ET AL: "Graphene-based composite materials", NATURE, NATURE PUBLISHING GROUP, UNITED KINGDOM, vol. 442, 20 July 2006 (2006-07-20), pages 282-286, XP002481410, ISSN: 0028-0836, DOI: 10.1038/NATURE04969<br>* the whole document *<br>-----<br>-/-- | 11 | |

The present search report has been drawn up for all claims

2

| Place of search | Date of completion of the search | Examiner |
|---|---|---|
| The Hague | 8 October 2015 | Mertins, Frédéric |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 15 16 3249

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CN 103 436 017 A (NAT UNIV DEFENSE TECHNOLOGY) 11 December 2013 (2013-12-11)<br>* abstract *<br>----- | 6,8 | |

TECHNICAL FIELDS SEARCHED (IPC)

The present search report has been drawn up for all claims

2

| Place of search | Date of completion of the search | Examiner |
|---|---|---|
| The Hague | 8 October 2015 | Mertins, Frédéric |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 15 16 3249

This annex lists the patent family members relating to the patent documents cited in the above-mentioned European search report.
The members are as contained in the European Patent Office EDP file on
The European Patent Office is in no way liable for these particulars which are merely given for the purpose of information.

08-10-2015

| Patent document cited in search report | Publication date | Patent family member(s) | Publication date |
|---|---|---|---|
| CN 103436017 A | 11-12-2013 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **STANKOVICH S ; DIKIN DA ; DOMMETT GHB ; KOHLHAAS KM ; ZIMNEY EJ ; STACH EA et al.** Graphene-based composite materials. *Nature,* 2006, vol. 442 (7100), 282-6
- **LIU Z ; ZHU S ; LI Y ; LI Y ; SHI P ; HUANG Z et al.** Preparation of graphene/poly(2-hydroxyethyl acrylate) nanohybrid materials via an ambient temperature ''grafting-from'' strategy. *Polymer Chemistry,* 2015, vol. 6 (2), 311-21
- **DU J ; CHENG H-M.** The Fabrication, Properties, and Uses of Graphene/Polymer Composites. *Macromolecular Chemistry and Physics,* 2012, vol. 213 (10-11), 1060-77
- **LEE HB ; RAGHU AV ; YOON KS ; JEONG HM.** Preparation and Characterization of Poly(ethylene oxide)/Graphene Nanocomposites from an Aqueous Medium. *Journal of Macromolecular Science Part B-Physics,* 2010, vol. 49 (4), 802-9
- **SALAVAGIONE HJ ; GOMEZ MA ; MARTINEZ G.** Polymeric Modification of Graphene through Esterification of Graphite Oxide and Poly(vinyl alcohol). *Macromolecules,* 2009, vol. 42 (17), 6331-4
- **HUANG Y ; YAN W ; XU Y ; HUANG L ; CHEN Y.** Functionalization of Graphene Oxide by Two-Step Alkylation. *Macromolecular Chemistry and Physics,* 2012, vol. 213 (10-11), 1101-6
- **DREYER DR ; PARK S ; BIELAWSKI CW ; RUOFF RS.** The chemistry of graphene oxide. *Chemical Society Reviews,* 2010, vol. 39 (1), 228-40
- **YOSHIMI MATSUMURA ; SHIGEJI HAGIWARA ; HIROSHI TAKAHASHI.** Automatic potentiometric titration of surface acidity of carbon black. *Carbon,* 1976, vol. 14 (3), 163-67
- Carbon: Electrochemical and Physicochemical Properties. **K. KINOSHITA.** Carbon materials. Wiley, 1988, 293-379
- **K. H. KANGASNIEMI ; D. A. CONDIT ; T. D. JARVI.** Characterization of Vulcan Electrochemically Oxidized under Simulated PEM Fuel Cell Conditions. *Journal of Electrochemical Society,* 2004, vol. 151 (4), E125-32
- **LALLART M ; COTTINET P-J ; GUYOMAR D ; LEBRUN L.** Electrostrictive polymers for mechanical energy harvesting. *Journal of Polymer Science Part B-Polymer Physics,* 2012, vol. 50 (8), 523-35